# EUROPEAN PATENT SPECIFICATION

(11) **EP 2 905 889 B1**
(45) Date of publication and mention of the grant of the patent: **27.12.2017**
(21) Application number: 15150339.8
(22) Date of filing: 07.01.2015
(51) Int. Cl.: H02M 1/084, H02M 1/00, H02M 7/483

(54) **Power conversion apparatus and control method thereof**
Leistungsumwandlungsvorrichtung und Steuerverfahren dafür
Appareil de conversion de puissance et son procédé de commande

(30) Priority: 07.01.2014 JP 2014001188
(43) Date of publication of application: 12.08.2015
(73) Proprietor: Hitachi, Ltd., Chiyoda-ku Tokyo 100-8280 (JP)
(72) Inventor: Ishikura, Yuki, Tokyo, 100-8280 (JP); Bandou, Akira, Tokyo, 100-8280 (JP); Kokura, Shin, Tokyo, 100-8280 (JP); Ichinose, Masaya, Tokyo, 100-8280 (JP); Ishikawa, Masakazu, Tokyo, 100-8280 (JP); Fujita, Ryou, Tokyo, 100-8280 (JP)
(74) Representative: Beetz & Partner mbB

(56) References cited:
- WO-A1-2011/010575

## Description

### BACKGROUND OF THE INVENTION

The present invention relates to a power conversion apparatus that converts AC power to DC power or conversely converts DC power to AC power and a control method thereof. The power conversion apparatus of the present invention includes a plurality of arms in which one or a plurality of unit converters are serially connected one another.

As a power conversion device that converts AC power to DC power or conversely converts DC power to AC power, an MMC (Modular Multilevel Converter) is conventionally used. This MMC is a converter that is capable of outputting a voltage exceeding a breakdown voltage of a switching device by using an on/off-controllable switching device such as an IGBT (Insulated Gate Bipolar Transistor) device. The MMC is configured by serially connecting a plurality of cells including the switching devices and capacitors. The MMC is expected to be applied to a DC power transmission system, a reactive power compensator, and a motor drive inverter. The MMC and a control device thereof are described in detail, for example, in WO 2011/010575 A.

In an Abstract of the WO 2011/010575 A, disclosed is a power conversion device, wherein among optical fiber cables used in control/communication, at least the majority of optical fiber cables with a high breakdown voltage, having a dielectric strength against output voltages of a plurality of cells can be eliminated and thus an optical fiber cable with a low breakdown voltage, having a dielectric strength against the output voltage of one cell can be used. Further, here, a length required for the optical fiber cable is reduced. A controller of the power conversion device having a plurality of cascade-connected cells includes a central controller, and a cell controller with the same potential as that of each cell, the cell controller being installed near each cell, wherein the central controller and each cell controller are daisy-chain connected through an optical fiber cable.

According to the invention disclosed in the WO 2011/010575 A, the majority of optical fiber cables used in control/communication of the power conversion device on which the MMC is mounted can be eliminated, and at the same time, a low-voltage optical fiber cable can be used.

According to the invention disclosed in the WO 2011/010575 A, the central control device transmits and receives a communication frame (see FIG. 4 of WO 2011/010575 A) including a command to each individual cell and information from each individual cell to and from each of the cell control devices. However, there is a problem as described below. The central control device transmits and receives information to and from a plurality of the cell control devices relating to a plurality of cells. Therefore, the length of the communication frame becomes long, and the communication period (control period) increases to generate a communication transmission delay. As a result, the control response is reduced.

### SUMMARY OF THE INVENTION

In view of the foregoing, it is an object of the present invention to provide a power conversion apparatus in which a communication transmission delay between a central control device and each cell control device is reduced and the control response is improved and a control method thereof.

The above-described objects are accomplished, according to the present invention, by a power conversion apparatus having the features of claim 1 and by a power conversion method having the features of claim 12, respectively.

Dependent claims are directed on features of preferred embodiments of the invention.
Other means will be described in an embodiment of the invention.

According to the present invention, it is possible to provide a power conversion apparatus in which a communication transmission delay between control devices is reduced and a control response is improved and a control method thereof.

### BRIEF DESCRIPTION OF THE DRAWINGS

FIG. 1 is a general configuration diagram illustrating a power conversion apparatus according to an embodiment;
FIG. 2 is a general configuration diagram illustrating each cell according to the embodiment;
FIG. 3 is a connection diagram illustrating each control device of the power conversion apparatus according to the embodiment;
FIG. 4 is an explanatory diagram illustrating a configuration and operations of each portion of a communication frame according to the embodiment; and
FIG. 5 is a general configuration diagram illustrating an intermediate control device and a cell control device according to the embodiment.

### DESCRIPTION OF THE EMBODIMENTS

Hereinafter, an embodiment of the present invention will be described in detail with reference to the accompanying drawings of the embodiment.

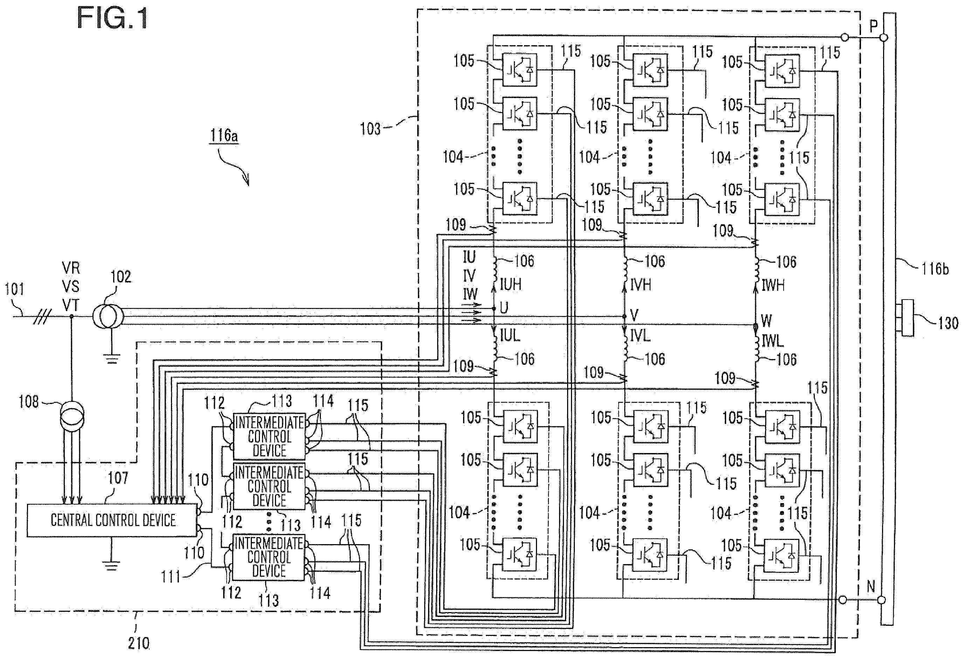

FIG. 1 is a general configuration diagram illustrating a power conversion apparatus 116a according to the embodiment.

As illustrated in FIG. 1, the power conversion apparatus 116a cooperates with a three-phase power system 101 via a transformer 102. To a point P and a point N of DC terminals of the power conversion apparatus 116a, a power conversion apparatus 116b on the other side having the same power conversion apparatus and transformer is connected. The power conversion apparatus 116b cooperates with another power system 130. The power conversion apparatus 116b is configured similarly to the power conversion apparatus 116a, and will be omitted.

The power conversion apparatus 116a includes the transformer 102 and a power conversion circuit 103. Further, the power conversion apparatus 116a receives and supplies AC power from and to the three-phase power system 101, and receives and supplies DC power from and to the power conversion apparatus 116b on the other side.

System phase voltages VR, VS, and VT are generated in the three-phase power system 101. Phase currents IU, IV, and IW flow on the secondary side of the transformer 102. A neutral point on the secondary side of the transformer 102 is grounded. The phase current IU flows while being branched into arm currents IUH and IUL at an AC terminal U. The phase current IV flows while being branched into arm currents IVH and IVL at an AC terminal V. The phase current IW flows while being branched into arm currents IWH and IWL at an AC terminal W.

The power conversion circuit 103 includes six series circuits of a reactor 106 and an arm 104 in which one or a plurality of cells 105 (an example of a unit converter) are serially connected. Further, the power conversion circuit 103 can convert AC power to DC power, or convert DC power to AC power. The series circuits of the arm 104 and the reactor 106 are connected to the transformer 102 via the AC terminals U, V, and W of each phase. That is, the power conversion circuit 103 is configured by the plurality of serial-connected (cascade-connected) cells 105. The conversion device having the above-described configuration is called a Modular Multilevel Converter (MMC).

Among the series circuits of the arm 104 and the reactor 106, three series circuits are connected between the DC terminal P and the AC terminals U, V, and W. The remaining three series circuits are connected between the DC terminal N and the AC terminals U, V, and W.

The arm current IUH flows from the AC terminal U toward the DC terminal P. The arm current IVH flows from the AC terminal V toward the DC terminal P. The arm current IWH flows from the AC terminal W toward the DC terminal P. The arm current IUL flows from the AC terminal U toward the DC terminal N. The arm current IVL flows from the AC terminal V toward the DC terminal N. The arm current IWL flows from the AC terminal W toward the DC terminal N.

In IGBT devices, for example, in a pressure-contact type IGBT device, a failure mode is short-circuiting. In the Modular Multilevel Converter according to the present embodiment, the pressure-contact type IGBT device is used in each of the cells 105, and a plurality of spare cells 105 are added to the arm 104. As a result, even if a short-circuit failure occurs in any one of the pressure-contact type IGBT devices of the plurality of cells 105, an operation can be continued by using the other cells 105 that are not out of order.

Each of the cells 105 includes a bidirectional chopper circuit having a DC capacitor (energy storage element) and an IGBT device (switching device). Each of the cells 105 includes at least one DC capacitor and at least one IGBT device. Each of the cells 105 is connected to an external circuit via at least two output terminals. Each of the cells 105 can be controlled so as to output either of a zero voltage and a positive voltage relying on a both-end voltage of the DC capacitor by on or off of the IGBT device.

The arm 104 is configured by N pieces of serial-connected cells 105. The power conversion circuit 103 includes six serial circuits of the arm 104 and the reactor 106. One end of the serial circuit of the arm 104 and the reactor 106 is each connected to the secondary side of the transformer 102 via a U phase, a V phase, or a W phase of the AC terminal. The other end of the serial circuits is each connected in parallel to the DC terminal P or N.

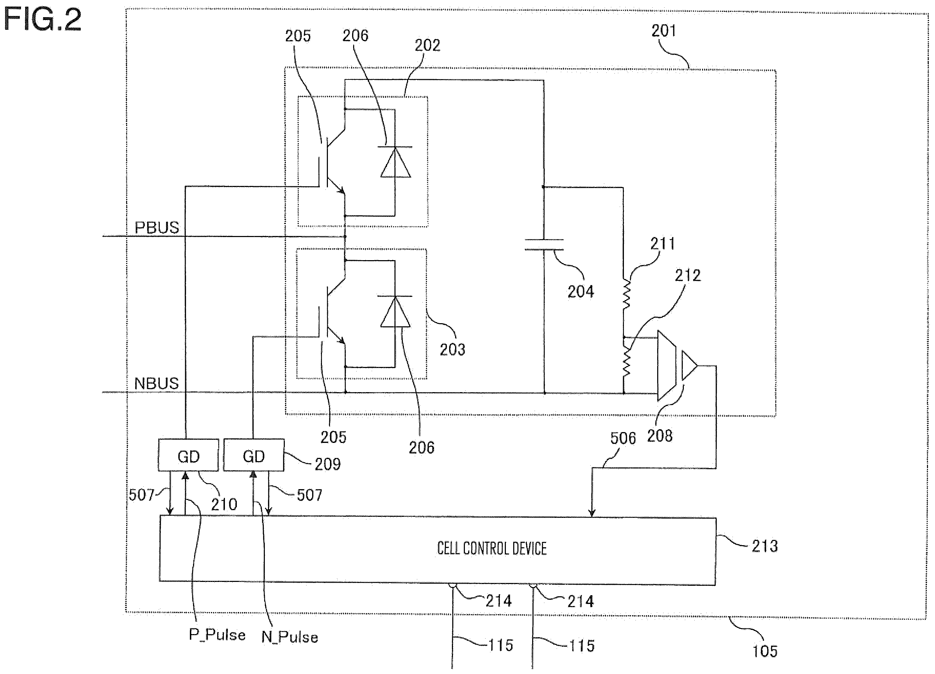

The power conversion apparatus 116a further includes a central control device 107 (first control device), an AC voltage sensor 108, a current sensor 109, m pieces of intermediate control devices (second control devices), and cell control devices 213 (third control devices) hereinafter illustrated in FIG. 2 within the cells 105.

The central control device 107 (first control device) collectively controls the cells 105 of the power conversion circuit 103, and controls each of the intermediate control devices 113 while transmitting a type of communication frame to each of the intermediate control devices 113. The central control device 107 is grounded, and is connected to an output side of the AC voltage sensor 108 and output sides of six current sensors 109. The central control device 107 controls the arm currents IUH, IVH, IWH, IUL, IVL, and IWL that flow on each of the cells 105. The central control device 107 receives and supplies AC power from and to the three-phase power system 101, and at the same time, receives and supplies DC power from and to the power conversion apparatus 116b on the other side.

The AC voltage sensor 108 is connected to the three-phase power system 101. The AC voltage sensor 108 detects system phase voltages VR, VS, and VT, and transmits instantaneous value signals to the central control device 107.

The six current sensors 109 are connected between the arms 104 and the reactors 106, and detect currents flowing on the arms 104, respectively. The respective current sensors 109 detect the arm currents IUH, IVH, IWH, IUL, IVL, and IWL and transmit instantaneous value signals to the central control device 107.

The central control device 107 has two optical transceivers 110. The central control device 107 is daisy-chain connected to the intermediate control devices so as to be communicated therewith through optical fiber cables 111. Specifically, one optical transceiver 110 is connected to the first intermediate control device 113. The other optical transceiver 110 is connected to the m-th intermediate control device 113. The first to m-th intermediate control devices 113 are connected to the adjacent intermediate control devices 113 through the optical fiber cables 111, respectively. As a result, the central control device 107 can be communicated with the m pieces of intermediate control devices 113 by using the two optical transceivers 110.

The intermediate control device 113 (second control device) is an interface device between the central control device 107 and a cell control device 213 (see FIG. 2) of each of the cells 105. The intermediate control device 113 has two optical transceivers 112 and a plurality of optical transceivers 114.

The two optical transceivers 112 are connected to the central control device 107 and/or another intermediate control device 113 through the optical fiber cables 111. The plurality of optical transceivers 114 are connected to the cell control devices 213 (third control devices) of respective cells 105 so as to be communicated therewith through optical fiber cables 115. As a result, the intermediate control device 113 can control the cell control device 213 of each of the cells 105.

FIG. 2 is a general configuration diagram illustrating each of the cells 105 according to the present embodiment. As illustrated in FIG. 2, each of the cells 105 includes a chopper cell 201, gate drivers 209 and 210, and the cell control device 213, and is connected to external devices by using output terminals PBUS and NBUS. In FIG. 2, the gate drivers 209 and 210 are written as a "GD", respectively.

The chopper cell 201 includes a series circuit of a high-side semiconductor device 202 and a low-side semiconductor device 203, a capacitor 204 connected in parallel to the series circuit, resistors 211 and 212, and a voltage sensor 208. The chopper cell 201 is connected to external devices by using the output terminals PBUS and NBUS.

The output terminal PBUS is connected to a connection node between an emitter of the semiconductor device 202 and a collector of the semiconductor device 203. The output terminal NBUS is connected to an emitter of the semiconductor device 203. The capacitor 204 is connected between a collector of the semiconductor device 202 and the emitter of the semiconductor device 203. The semiconductor devices 202 and 203 are each configured by the IGBT devices 205 and antiparallel diodes 206. A collector of the IGBT device 205 is connected to a cathode of the antiparallel diode 206. An emitter of the IGBT device 205 is connected to an anode of the antiparallel diode 206.

The resistors 211 and 212 are connected serially to each other, and are connected to both ends of the capacitor 204. The voltage sensor 208 is connected in parallel to both ends of the resistor 212. The voltage sensor 208 detects a voltage divided by the resistors 211 and 212, and transmits a capacitor voltage detection value 506 to the cell control device 213.

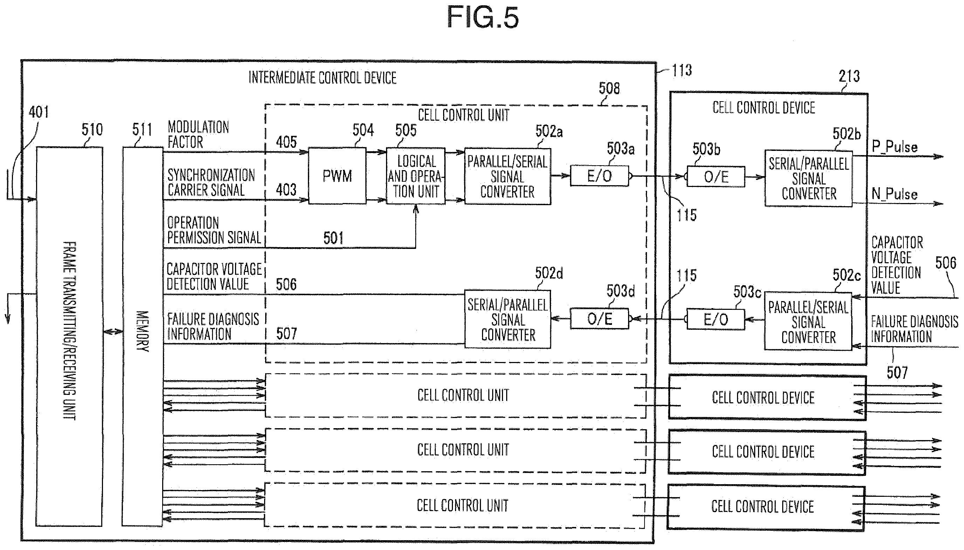

The cell control device 213 is installed near the same potential as that of the chopper cell 201 controlled by the cell control device 213. The cell control device 213 supplies to the gate driver 209 a pulse command N_Pulse for driving the IGBT device, and supplies to the gate driver 210 a pulse command P_Pulse for driving the IGBT device. The gate driver 209 supplies a gate voltage to the low-side IGBT device 205. The gate driver 210 supplies a gate voltage to the high-side IGBT device 205. The gate drivers 209 and 210 further supply failure diagnosis information 507 (see FIG. 5) such as their power malfunction to the cell control device 213.

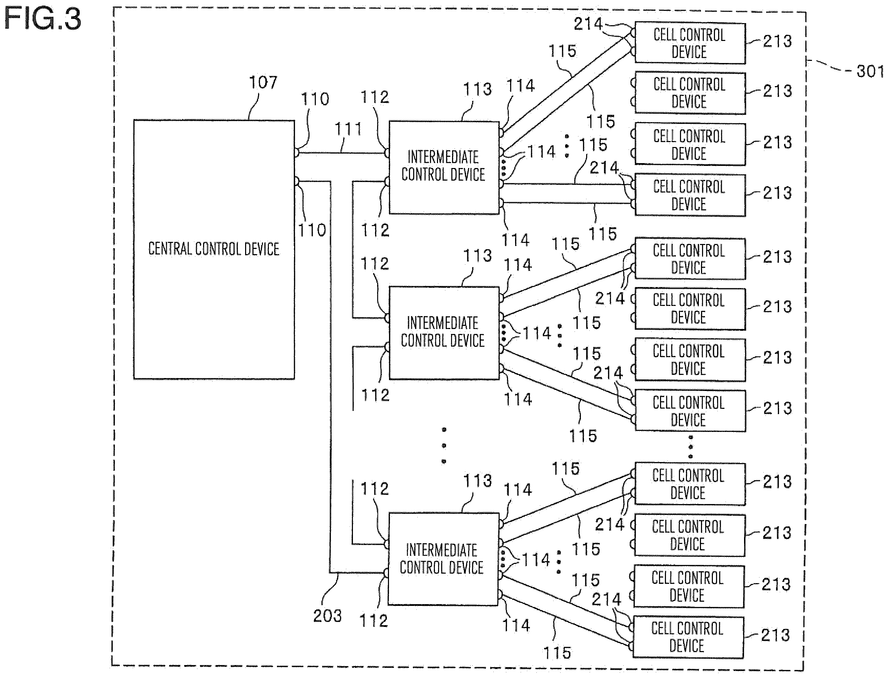

FIG. 3 is a connection diagram of each control device of the power conversion apparatus 116a according to the present embodiment.

As illustrated in FIG. 3, a communication control system 301 includes the central control device 107, the respective optical fiber cables 111, the respective intermediate control devices 113, the respective optical fiber cables 115, and the respective cell control devices 213.

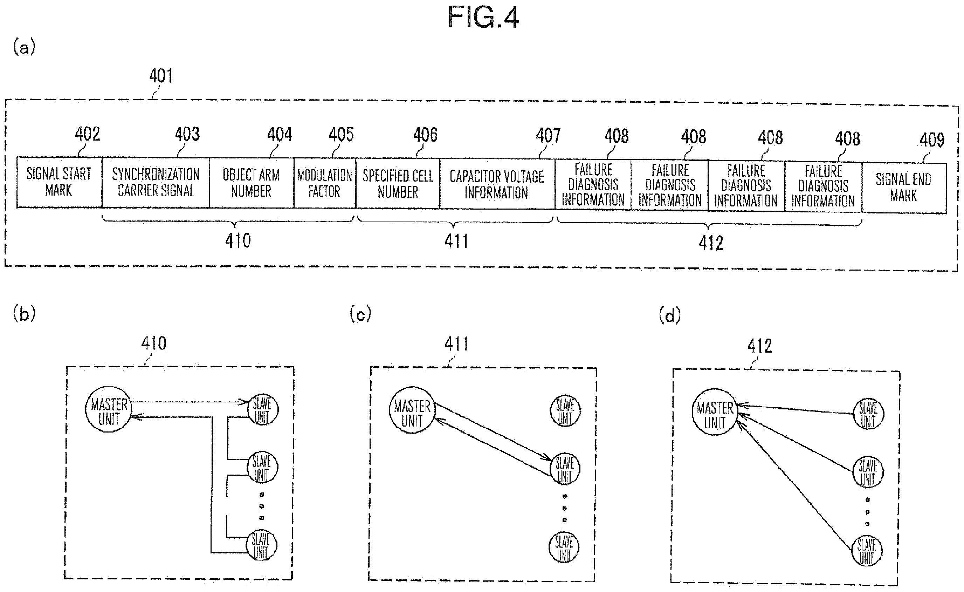

The central control device 107 (first control device) has the two optical transceivers 110, and is daisy-chain connected to each of the intermediate control devices 113 through the optical fiber cables 111. Each of the intermediate control devices 113 has the two optical transceivers 112, and is daisy-chain connected to the central control device 107. From one of the two optical transceivers 110, the central control device 107 transmits the communication frame 401 (see FIG. 4) to the intermediate control device 113 in a predetermined control period.

Each of the intermediate control devices 113 (second control device) has the plurality of optical transceivers 114, and is connected in star to the respective cell control devices 213 through the optical fiber cables 115. In an example of FIG. 3, one intermediate control device 113 is connected in star to four cell control devices 213. As a result, even if any of the cell control devices 213 are out of order, the intermediate control device 113 can continue communication with the other cell control devices 213.

Each of the cell control devices 213 (third control devices) has the two optical transceivers 214 and is connected to the intermediate control device 113 through the two optical fiber cables 115. One of the two optical transceivers 214 and one of the two optical fiber cables 115 are used for reception from the intermediate control device 113 to the cell control device 213. The other of the two optical transceivers 214 and the other of the two optical fiber cables 115 are used for transmission from the cell control device 213 to the intermediate control device 113.

The intermediate control device 113 transmits command information to each of the cell control devices 213 in a predetermined control period by using the optical transceiver 114. Each of the cell control devices 213 receives the command information by using one of the two optical transceivers 214, and transmits status information by using the other of the two optical transceivers 214.

FIGS. 4A to 4D are explanatory diagrams of operations of each unit and a configuration of the communication frame 401 according to the present embodiment. This communication frame 401 is transmitted and received between the central control device 107 and each of the intermediate control devices 113. The central control device 107 and each of the intermediate control devices 113 transmit and receive control information or the status information by using one type of communication frame 401. The communication frame is set to one type, and thereby communication processing can be simplified between the central control device 107 and each of the intermediate control devices 113.

The (a) of the FIG. 4 is a configuration diagram illustrating the communication frame 401.

As illustrated in the (a) of the FIG. 4, the communication frame 401 includes a communication start mark 402, broadcast 410, specified cell information 411, cell state information 412, and a signal end mark 409. That is, the broadcast 410 being common command information is summarized in the communication frame 401. In addition, information such as a CRC (Cyclic Redundancy Check), a parity, and a check sum may be included in the communication frame 401.

The broadcast 410 (common command information) includes a synchronization carrier signal 403, an object arm number 404 specifying the arm 104 being an object, and a modulation factor 405 common to the cell 105 configuring the arm 104 being an object. The central control device 107 (first control device) transmits the broadcast 410 (common command information) summarized into one type of communication frame 401 to each of the intermediate control devices 113 (second control devices). On the basis of the broadcast 410 summarized into one type of communication frame 401, the intermediate control device 113 (second control device) performs distribution control of each of the cell control devices 213 (third control devices). As a result, since the control information of the individual cells 105 is made common, the communication frame 401 is shortened to thereby reduce a communication transmission delay.

The specified cell information 411 includes a specifying cell number 406 for individually specifying the cells 105 that acquire information, and dummy voltage information about the specified cell 105, or capacitor voltage information 407 for storing actual voltage information. However, the specified cell information 411 is not limited thereto; further, may include temperature information about the IGBT device 205.

Examples of the cell state information 412 (state information about the unit converter) include failure diagnosis information 408 about each of the cells 105. The failure diagnosis information 408 is minimum information (for example, one bit) indicating the presence or absence of a failure of n pieces of cells 105. The failure diagnosis information 408 is minimized, and thereby the communication frame 401 can be further shortened. The communication frame 401 is shortened, and thereby a memory capacity for storing the communication frame 401 can be reduced, and at the same time, a time for processing the communication frame 401 can be shortened. Therefore, a malfunction of all the cells 105 can be detected for a short time and the power conversion apparatus 116a can be stopped rapidly.

The (b) of the FIG. 4 illustrates a logical operation of the broadcast 410. As illustrated in the (b) of the FIG. 4, the broadcast 410 is each transmitted from the central control device 107 being a master unit to the intermediate control device 113 being a slave unit, and then is returned to the central control device 107 being a master unit.

The (c) of the FIG. 4 illustrates a logical operation of the specified cell information 411.

As illustrated in the (c) of the FIG. 4, the specified cell information 411 is each transmitted from the central control device 107 being a master unit to the cell control device 213 of a K-th specified cell being a slave unit via the intermediate control device 113 (not illustrated), and then is returned to the central control device 107 being a master unit.

The (d) of the FIG. 4 illustrates a logical operation of the cell state information 412.

As illustrated in the (d) of the FIG. 4, the cell state information 412 is concurrently transmitted from each of the cell control devices 213 being a slave unit to the central control device 107 being a master unit via the intermediate control device 113 (not illustrated).

FIG. 5 is a general configuration diagram illustrating the intermediate control device 113 and the cell control devices 213 according to the present embodiment. Here, the cell control device 213 corresponding to the K-th cell (not illustrated) and the intermediate control device 113 connected thereto are illustrated in detail.

The intermediate control device 113 includes a frame transmitting/receiving unit 510, a memory 511, and a plurality of cell control units 508.

The frame transmitting/receiving unit 510 transmits and receives the communication frame 401 illustrated in FIG. 4. The frame transmitting/receiving unit 510 writes the received communication frame 401 in the memory 511, and then transmits the communication frame 401 to another device in a predetermined period.

The memory 511 is a buffer for temporarily storing the communication frame 401.

Each of the cell control units 508 includes a PWM (Pulse Width Modulation) control unit 504, a logical AND operation unit 505, a parallel/serial signal converter 502a, an electric/optical signal converter 503a, an optical/electric signal converter 503d, and a serial/parallel signal converter 502d. In the figure, the PWM (Pulse Width Modulation) control unit 504 is simply described as a "PWM" and the logical AND operation unit 505 is simply described as a "logical AND". The cell control unit 508 is each connected to the cell control device 213 through the two optical fiber cables 115 (see FIG. 2).

The cell control device 213 includes an optical/electric signal converter 503b, a serial/parallel signal converter 502b, a parallel/serial signal converter 502c, and an electric/optical signal converter 503c.

The cell control unit 508 and the cell control device 213 corresponding to the K-th cell store an ID number Q peculiar to the K-th cell in a storage unit (not illustrated).

When information about the object arm number 404 of the communication frame 401 is equal to an identification number of the arm to which the K-th cell belongs, the cell control unit 508 compellingly sets a carrier phase of the cell control unit 508 to a predetermined value (for example, zero). The cell control unit 508 stores phase information (the U phase, the V phase, and the W phase) about the arm 104 to which the K-th cell belongs, in the storage unit (not illustrated). From the modulation factor 405 of the communication frame 401 received by the frame transmitting/receiving unit 510, the cell control unit 508 extracts the modulation factor of the phase to which the K-th cell belongs and sets the above modulation factor as the modulation factor of the cell control unit 508. When information about the specifying cell number 406 of the communication frame 401 is equal to the ID number Q of the cell control unit 508, the cell control unit 508 further rewrites the capacitor voltage information 407.

Hereinafter, a signal flow from the intermediate control device 113 to the cell control device 213 corresponding to the K-th cell will be arbitrarily described with reference to FIGS. 4 and 5.

The frame transmitting/receiving unit 510 of the intermediate control device 113 receives the communication frame 401 in a predetermined period. A reception period of the communication frame 401 is equal to a control period of the central control device 107.

In the cell control unit 508 corresponding to the K-th cell of the intermediate control device 113, the synchronization carrier signal 403 and the modulation factor 405 stored in the memory 511 are changed into two PWM signals by the PWM control unit 504, and are supplied to the logical AND operation unit 505.

A logical product of the operation permission signal 501 and the two PWM signals produced from the PWM control unit 504 is calculated by the logical AND operation unit 505, and as a result, two fresh PWM signals are generated. When the operation permission signal 501 is equal to zero indicating a "stoppage", both of the two fresh PWM signals are turned off. The operation permission signal 501 is specified by another control signal (not illustrated). However, the operation permission signal 501 is not limited thereto, and may be included in any information of the communication frame 401 (see FIG. 4).

The two fresh PWM signals (parallel signals) produced from the logical AND operation unit 505 are converted to serial signals (electric signals) by using the parallel/serial signal converter 502a corresponding to the K-th cell.

The serial signals (electric signals) are converted to optical signals by using the electric/optical signal converter 503a. The optical signals are transmitted to the cell control device 213 corresponding to the K-th cell through the optical fiber cable 115.

In the cell control device 213 corresponding to the K-th cell, the optical signals are received by using the optical transceiver 214 (not illustrated). The optical signals are converted to electric signals (serial signals) by using the optical/electric signal converter 503b. The electric signals (serial signals) are converted to two parallel signals by using the serial/parallel signal converter 502b. The two parallel signals act as the pulse commands P_Pulse and N_pulse as the PWM signal, respectively. The pulse command P_Pulse acts as the gate voltage of the high-side IGBT device 205 (see FIG. 2). The pulse command N_Pulse acts as the gate voltage of the low-side IGBT device 205 (see FIG. 2).

Next, a signal flow to the intermediate control device 113 from the cell control device 213 corresponding to the K-th cell will be described. The cell control device 213 corresponding to the K-th cell acquires the capacitor voltage detection value 506 and the failure diagnosis information 507 in a predetermined control period. In FIG. 5, the capacitor voltage detection value 506 is simply described as a "capacitor voltage". Parallel signals of the capacitor voltage detection value 506 and the failure diagnosis information 507 are converted to serial signals by using the parallel/serial signal converter 502c. The serial signals (electric signals) are converted to optical signals by using the electric/optical signal converter 503c. Further, the optical signals are transmitted to the cell control unit 508 of the intermediate control device 113 through the optical transceiver 214 and the optical fiber cable 115 (not illustrated).

By the cell control unit 508 corresponding to the K-th cell of the intermediate control device 113, the optical signals are received by using the optical transceiver 114 (not illustrated). The optical signals are converted to serial signals (electric signals) by using the optical/electric signal converter 503d. The serial signals (electric signals) are converted to parallel signals by using the serial/parallel signal converter 502d. Further, the parallel signals are produced as the capacitor voltage detection value 506 and the failure diagnosis information 507, and the communication frame 401 stored in the memory 511 is rewritten.

In the capacitor voltage information 407 of the communication frame 401 illustrated in FIG. 4, dummy information is first stored. When information about the specifying cell number 406 of the communication frame 401 is equal to the ID number Q of the cell control unit 508, the capacitor voltage detection value 506 is stored in the capacitor voltage information 407 of the communication frame 401. As described above, in the communication frame 401, only the capacitor voltage detection value 506 of the cell specified by the specifying cell number 406 is stored in the capacitor voltage information 407, and therefore the communication frame 401 can be shortened.

Of the failure diagnosis information 408 each allocated to all the cells 105, the failure diagnosis information 507 is written in the failure diagnosis information 408 corresponding to the K-th cell.

The communication frame 401 stored in the memory 511 is transmitted to the following intermediate control device 113 or central control device 107 by using the frame transmitting/receiving unit 510. In the case of six intermediate control devices 113, for example, the communication frame 401 stored in the memory 511 of a fifth intermediate control device 113 is transmitted to a sixth intermediate control device 113. The communication frame 401 stored in the memory 511 of the sixth intermediate control device 113 is transmitted to the central control device 107. The central control device 107 acquires the capacitor voltage information 407 of the cell specified by the transmitted communication frame 401 and the simple failure diagnosis information 408 of each of the cells 105.

As described above, in the present embodiment, only the capacitor voltage information 407 of the cell 105 specified in the communication frame 401 generated by the central control device 107 and the minimum failure diagnosis information 408 of each of the cells 105 are written. The failure diagnosis information 408 indicates, for example, the presence or absence of a failure by using information of one bit for each cell 105. Accordingly, since the communication frame 401 can be shortened, the central control device 107 shortens a communication period, and fast updates a command in a short period to thereby transmit the command to the cell 105. As a result, the power conversion apparatus 116a can secure stability of a control system while a fast response is realized.

### (Modification)

The present invention is not limited to the above-described embodiments, but includes various modifications. For example, the above-described embodiments are described in detail in order to clearly describe the present invention, and are not necessarily limited to the apparatus having all the described constructions. Further, a part of constructions according to one embodiment can be replaced by those according to other embodiment, and the constructions according to other embodiment can be added to that according to one embodiment. Further, an addition, deletion, or replacement of the constructions according to other embodiment can be performed by using a part of the constructions according to each embodiment.

A part or all of the respective structures, functions, and processing units may be realized by hardware by designing through the integrated circuit, for example. Those structures, functions and the like may be realized by software by interpreting and executing the program for realizing the respective functions through a processor.

The embodiment shows the control line and information line considered as necessary for the explanation, which does not necessarily show all the control lines and information lines of the product. Actually, almost all the components may be considered to be connected with one another.

As modifications of the present invention, for example, items (a) to (g) will be described below.
(a) In the present embodiment, a case where each of the cells 105 is configured by using the chopper cell is described. However, the embodiment is not limited thereto; further, each of the cells 105 may be configured by using a full-bridge cell. Each of the cells 105 is configured by using the full-bridge cell, and thereby each of the cells 105 can be controlled so as to output either of a positive or negative voltage and a zero voltage relying on a both-end voltage of a DC capacitor by on or off of the IGBT device.
(b) The power conversion apparatus 116a according to the embodiment is a three-phase MMC that cooperates with the three-phase power system 101. However, the embodiment is not limited thereto; further, the embodiment may be applied to a single phase MMC that cooperates with a single phase system, an MMC that drives a motor, and a zero-phase cancellation type MMC (ZC-MMC) using a zigzag connection transformer.
(c) The intermediate control device 113 according to the present embodiment is connected in star to n pieces of cell control devices 213 in one-to-n manner. Further, the intermediate control device 113 may be daisy-chain connected to n pieces of cell control devices 213. As a result, in the intermediate control device 113, the number of the optical transceivers 114 can be reduced to two.
(d) The communication frame is not limited to one type. For example, the communication frame may be divided into three types of information of common command information, status information, and information for specifying any one of a plurality of cells and internal information about the specified cell. Or, the above information may be arbitrarily united. The central control device 107 repeatedly transmits the above divided communication frames by a predetermined pattern. The central control device 107 may repeatedly transmit the above divided communication frames by turns.
(e) Each of the cells 105 may be star connected to the intermediate control device 113 in units of the arms 104. Thereby, the central control device 107 transmits control information in units of the arms 104 to each of the intermediate control devices 113. Each of the intermediate control devices 113 can convert the control information in units of the arms 104, in units of the cell control device 213 of each of the cells 105, for control.
(f) Each of the cells 105 may be star connected to the intermediate control device 113 in units of each phase of alternating currents. Thereby, the central control device 107 transmits the control information in units of each phase of alternating currents to each of the intermediate control devices 113. Each of the intermediate control devices 113 can convert the control information in units of each phase of alternating currents, in units of the cell control device 213 of each of the cells 105, for control.
(g) Each phase of the AC terminals in the power conversion apparatus is connected to a multi-phase power source such as the three-phase power system 101 via the transformer. In addition, each phase of the AC terminals may be connected to a multi-phase load such as a motor.
The above embodiments of the invention as well as the appended claims and figures show multiple characterizing features of the invention in specific combinations. The skilled person will easily be able to consider further combinations or sub-combinations of these features in order to adapt the invention as defined in the claims to his specific needs.

## Claims

1. A power conversion apparatus (116a) comprising:
a unit converter (105) which includes at least one energy storage element (204) and at least one switching device (202, 203) and which outputs either of a positive or negative voltage and a zero voltage relying on a voltage of the energy storage element by on or off of the switching device;
an arm (104) in which one or a plurality of the unit converters (105) are serially connected;
a power conversion circuit (103) which includes the arm in plurality and which is capable of converting an alternating current to a direct current or converting a direct current to an alternating current; and
a first control device (107) which collectively controls each of the unit converters (105);
**characterized by** further comprising:
a plurality of second control devices (113) which are daisy-chain connected to the first control device; and
a plurality of third control devices (213) which are connected to the second control device (113) and each of which controls switching elements/gate drivers (209, 210) of one of the unit converters (105), wherein
a communication frame (401) which is transmitted and received to and from each of the second control devices (113) by the first control device (107) is of a type common to the plurality of second control devices (113), and wherein
the communication frame (401) which is transmitted and received to and from each of the second control devices (113) by the first control device (107) includes common command information (410) to each of the second control devices (113).

2. The power conversion apparatus according to claim 1, wherein
the common command information includes a synchronization carrier signal (403) and a modulation factor (405) with respect to each of the unit converters (105).

3. The power conversion apparatus according to claim 1, wherein
the communication frame further includes status information (412) of each of the unit converters (105).

4. The power conversion apparatus according to claim 3, wherein
the status information indicates a status in each of the unit converters (105) with one bit.

5. The power conversion apparatus according to claim 3, wherein
the status information is information indicating whether a failure of each of the unit converters (105) is present or absent.

6. The power conversion apparatus according to claim 3, wherein
the communication frame (401) further includes information (411) for specifying any one of a plurality of the unit converters (105) and internal information about the unit converter (105).

7. The power conversion apparatus according to claim 6, wherein
the internal information about the unit converter (105) includes voltage information about the energy storage element or temperature information about the switching device.

8. The power conversion apparatus according to claim 1, wherein
the third control device (213) is installed so as to have the same potential as that of the unit converter (105) controlled by the third control device (213).

9. The power conversion apparatus according to claim 1, wherein
the second control device (113) includes a cell control unit (508) which controls each of the third control devices (213).

10. The power conversion apparatus according to claim 9, wherein
the cell control unit (508) of the second control device includes a PWM (Pulse Width Modulation) control unit (504).

11. The power conversion apparatus according to claim 1, wherein
each phase of an AC terminal of the power conversion circuit is connected to a multi-phase power source (101) or a multi-phase load via a transformer (102).

12. A control method for use in a power conversion apparatus (116a) according to one of claims 1 - 11, the control method comprising:
causing the first control device to transmit a type of communication frame (401) to each of the second control devices (113) for control;
causing each of the second control devices (113) to control each of the third control devices (213) on a basis of the communication frame (401); and
causing each of the third control devices (213) to control each of the unit converters (105) which is arranged near the third control device (213).

## Patentansprüche

1. Leistungswandlervorrichtung (116a) mit:
einer Wandlereinheit (105), die mindestens ein Energiespeicherelement (204) und mindestens eine Schaltvorrichtung (202, 203) umfasst und die entweder eine positive oder negative Spannung und eine Nullspannung ausgibt, wobei die Nullspannung auf einer Spannung des Energiespeicherelements durch die Schalterstellung An oder Aus der Schaltvorrichtung beruht,
einem Zweig (104), in dem eine oder mehrere der Wandlereinheiten (105) in Reihe geschaltet sind,
einer Leistungswandlerschaltung (103), die mehrere Zweige umfasst und die in der Lage ist, einen Wechselstrom in einen Gleichstrom zu wandeln oder einen Gleichstrom in einen Wechselstrom zu wandeln, und
einer ersten Steuervorrichtung (107), die jede der Wandlereinheiten (105) gemeinsam steuert,
**dadurch gekennzeichnet, dass** die Wandlervorrichtung ferner aufweist:
eine Mehrzahl zweiter Steuervorrichtungen (113), die mit der ersten Steuervorrichtung in Reihe geschaltet sind, und
eine Mehrzahl dritter Steuervorrichtungen (213), die mit der zweiten Steuervorrichtung (113) verbunden sind und von denen jede Schaltelemente/Gate-Treiber (209, 210) einer der Wandlereinheiten (105) steuert, wobei
ein Kommunikationsrahmen (401), der von der ersten Steuervorrichtung (107) zu jeder der zweiten Steuervorrichtungen (113) übertragen und von diesen empfangen wird, von einem Typ ist, der der Mehrzahl der zweiten Steuervorrichtungen (113) gemeinsam ist, und wobei
der Kommunikationsrahmen (401), der von der ersten Steuervorrichtung (107) zu jeder der zweiten Steuervorrichtungen (113) übertragen und von diesen empfangen wird, gemeinsame Befehlsinformationen (410) für jede der zweiten Steuervorrichtungen (113) umfasst.

2. Leistungswandlervorrichtung nach Anspruch 1, wobei die gemeinsamen Befehlsinformationen ein Synchronisations-Trägersignal (403) und einen Modulationsfaktor (405) bezüglich eines jeden der Wandlereinheiten (105) umfassen.

3. Leistungswandlervorrichtung nach Anspruch 1, wobei der Kommunikationsrahmen ferner Statusinformationen (412) einer jeden Wandlereinheit (105) umfasst.

4. Leistungswandlervorrichtung nach Anspruch 3, wobei die Statusinformation einen Status in jeder Wandlereinheit (105) mit einem Bit anzeigt.

5. Leistungswandlervorrichtung nach Anspruch 3, wobei die Statusinformation eine Information ist, die anzeigt, ob ein Fehler eines jeden der Wandlereinheiten (105) vorliegt oder nicht.

6. Leistungswandlervorrichtung nach Anspruch 3, wobei der Kommunikationsrahmen (401) ferner Informationen (411) zur genauen Beschreibung einer jeden der Mehrzahl von Wandlereinheiten (105) und interne Informationen über die Wandlereinheit (105) umfasst.

7. Leistungswandlervorrichtung nach Anspruch 6, wobei die internen Informationen über die Wandlereinheit (105) Spannungsinformationen über das Energiespeicherelement oder Temperaturinformationen über die Schaltvorrichtung umfassen.

8. Leistungswandlervorrichtung nach Anspruch 1, wobei die dritte Steuervorrichtung (213) so ausgerüstet ist, dass sie das gleiche Potential wie das der Wandlereinheit (105) aufweist, die von der dritten Steuervorrichtung (213) gesteuert wird.

9. Leistungswandlervorrichtung nach Anspruch 1, wobei die zweite Steuervorrichtung (113) eine Zellensteuereinheit (508) aufweist, die jede der dritten Steuervorrichtungen (213) steuert.

10. Leistungswandlervorrichtung nach Anspruch 9, wobei die Zellensteuereinheit (508) der zweiten Steuervorrichtung eine PWM(Pulsweitenmodulations)-Steuereinheit (504) aufweist.

11. Leistungswandlervorrichtung nach Anspruch 1, wobei jede Phase eines Wechselstromanschlusses der Leistungswandlerschaltung mit einer Mehrphasenleistungsquelle (101) oder einer Mehrphasenlast über einen Transformator (102) verbunden ist.

12. Steuerverfahren zur Anwendung in einer Leistungswandlervorrichtung (116a) nach einem der Ansprüche 1 - 11, wobei das Steuerverfahren die Schritte aufweist:
Bewirken, dass die erste Steuervorrichtung einen Typ eines Kommunikationsrahmens (401) an jede der zweiten Steuervorrichtungen (113) zur Steuerung übermittelt;
Bewirken, dass jede der zweiten Steuervorrichtungen (113) jede der dritten Steuervorrichtungen (213) auf der Grundlage des Kommunikationsrahmens (401) steuert, und
Bewirken, dass jede der dritten Steuervorrichtungen (213) jede der Wandlereinheiten (105), die in der Nähe der dritten Steuervorrichtung (213) angeordnet ist, steuert.

## Revendications

1. Appareil (116a) de conversion d'énergie comprenant :
un convertisseur unitaire (105) qui inclut au moins un élément (204) de stockage d'énergie et au moins un dispositif (202, 203) de commutation et qui délivre en sortie l'une ou l'autre d'une tension positive ou négative et une tension zéro en fonction d'une tension de l'élément de stockage d'énergie en activant ou en désactivant le dispositif de commutation ;
un bras (104) dans lequel un ou une pluralité des convertisseurs unitaires (105) sont connectés en série ;
un circuit (103) de conversion d'énergie qui inclut le bras en pluralité et qui est apte à convertir un courant alternatif en un courant continu ou convertir un courant continu en un courant alternatif ; et
un premier dispositif (107) de commande qui commande collectivement chacun des convertisseurs unitaires (105) ; **caractérisé en ce que** comprenant en outre :
une pluralité de deuxièmes dispositifs (113) de commande qui sont connectés en guirlande au premier dispositif de commande ; et
une pluralité de troisièmes dispositifs (213) de commande qui sont connectés au deuxième dispositif (113) de commande et dont chacun commande des éléments de commutation/pilotes de grille (209, 210) d'un des convertisseurs unitaires (105), dans lequel
une trame (401) de communication qui est transmise et reçue à et de chacun des deuxièmes dispositifs (113) de commande par le premier dispositif (107) de commande est d'un type commun à la pluralité de deuxièmes dispositifs (113) de commande, et dans lequel
la trame (401) de communication qui est transmise et reçue à et de chacun des deuxièmes dispositifs (113) de commande par le premier dispositif (107) de commande inclut une information (410) de commande commune à chacun des deuxièmes dispositifs (113) de commande.

2. Appareil de conversion d'énergie selon la revendication 1, dans lequel
l'information de commande commune inclut un signal porteur (403) de synchronisation et un facteur (405) de modulation pour ce qui concerne chacun des convertisseurs unitaires (105).

3. Appareil de conversion d'énergie selon la revendication 1, dans lequel
la trame de communication inclut en outre une information (412) de statut de chacun des convertisseurs unitaires (105).

4. Appareil de conversion d'énergie selon la revendication 3, dans lequel
l'information de statut indique un statut dans chacun des convertisseurs unitaires (105) avec un bit.

5. Appareil de conversion d'énergie selon la revendication 3, dans lequel
l'information de statut est une information indiquant si un dysfonctionnement de chacun des convertisseurs unitaires (105) est présent ou absent.

6. Appareil de conversion d'énergie selon la revendication 3, dans lequel
la trame (401) de communication inclut en outre une information (411) pour spécifier l'un quelconque d'une pluralité de convertisseurs unitaires (105) et une information interne à propos du convertisseur unitaire (105).

7. Appareil de conversion d'énergie selon la revendication 6, dans lequel
l'information interne à propos du convertisseur unitaire (105) inclut une information de tension à propos de l'élément de stockage d'énergie ou une information de température à propos du dispositif de commutation.

8. Appareil de conversion d'énergie selon la revendication 1, dans lequel
le troisième dispositif (213) de commande est installé de manière à avoir le même potentiel que celui du convertisseur unitaire (105) commandé par le troisième dispositif (213) de commande.

9. Appareil de conversion d'énergie selon la revendication 1, dans lequel
le deuxième dispositif (113) de commande inclut une unité (508) de commande de cellule qui commande chacun des troisièmes dispositifs (213) de commande.

10. Appareil de conversion d'énergie selon la revendication 9, dans lequel
l'unité (508) de commande de cellule du deuxième dispositif de commande inclut une unité (504) de commande MID (modulation d'impulsions en durée).

11. Appareil de conversion d'énergie selon la revendication 1, dans lequel
chaque phase d'une borne CA du circuit de conversion d'énergie est connectée à une source (101) d'énergie multiphase ou à une charge multiphase par l'intermédiaire d'un transformateur (102).

12. Procédé de commande pour une utilisation dans un appareil (116a) de conversion d'énergie selon l'une des revendications 1 - 11, le procédé de commande comprenant :
de faire en sorte que le premier dispositif de commande transmette un type de trame (401) de communication à chacun des deuxièmes dispositifs (113) de commande pour commande ;
de faire en sorte que chacun des deuxièmes dispositifs (113) de commande commande chacun des troisièmes dispositifs (213) de commande sur une base de la trame (401) de communication ; et
de faire en sorte que chacun des troisièmes dispositifs (213) de commande commande chacun des convertisseurs unitaires (105) qui est agencé à côté du troisième dispositif (213) de commande.
